# EUROPEAN PATENT SPECIFICATION

(11) **EP 2 422 584 B1**
(45) Date of publication and mention of the grant of the patent: **20.11.2013**
(21) Application number: 10718287.5
(22) Date of filing: 16.04.2010
(51) Int. Cl.: H05B 33/08

(54) **SYSTEM FOR DRIVING A LAMP**
SYSTEM ZUR ANSTEUERUNG EINER LAMPE
SYSTÈME POUR PILOTER UNE LAMPE

(30) Priority: 21.04.2009 EP 09158353
(43) Date of publication of application: 29.02.2012
(73) Proprietor: Koninklijke Philips N.V., 5656 AE Eindhoven (NL)
(72) Inventor: HONTELE, Bertrand, J., E., 5656 AE Eindhoven (NL)
(74) Representative: van Eeuwijk, Alexander Henricus Waltherus
(86) International application number: PCT/IB2010/051659
(87) International publication number: WO 2010/122461

(56) References cited:
- US-A1- 2001 024 112
- US-A1- 2005 122 060
- US-A1- 2009 015 174

## Description

### FIELD OF THE INVENTION

The present invention relates in general to a system for driving light sources, particularly solid state light sources such as LEDs, powered from an alternating power source such as mains, capable of dimming the light source. In the following, the light source will simply be indicated as "LED".

### BACKGROUND OF THE INVENTION

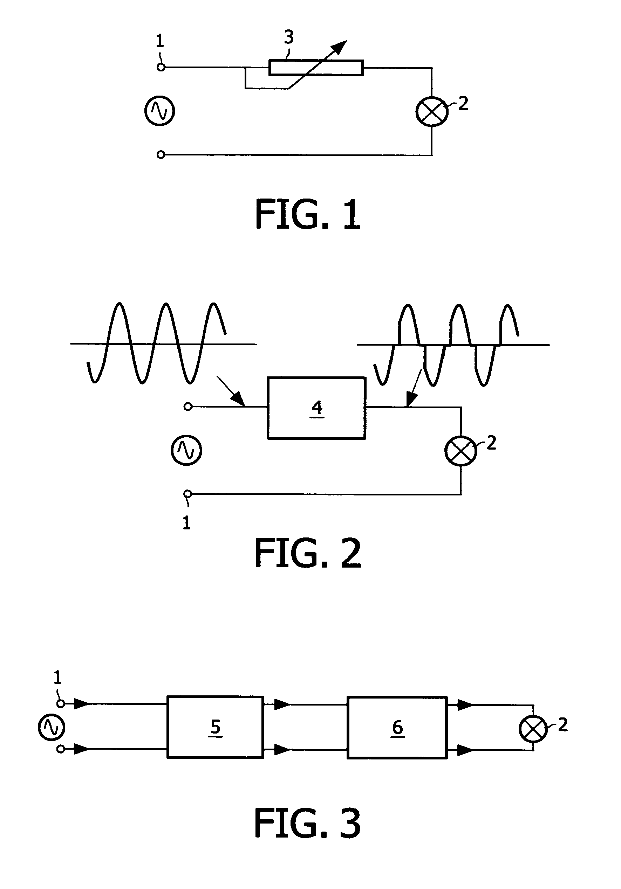

Figure 1 schematically illustrates a traditional approach for dimming a light source 2. A variable resistor 3 is connected in series with the light source 2, and this series arrangement is connected to an input 1, which is to be connected to mains, which can be considered to be a source of constant amplitude alternating voltage. As a result, the light source will receive less voltage. Disadvantages of this approach include the dissipation occurring in the resistor, the reduced accuracy of the dimming level at low intensities, and a color shift of the light output due to changing LED current.

Figure 2 schematically illustrates a different but nevertheless traditional approach for dimming a light source 2. A dimmer 4 receives the AC voltage from mains at its input, and outputs a phase-cut AC voltage, i.e. a voltage that is substantially zero for a range of phases and substantially equal to the input voltage for the remaining phases. A disadvantage of such approach is that it may lead to visible flicker and stroboscopic effects.

Figure 3 schematically illustrates an approach which avoids the above disadvantages, and which will be indicated as "duty cycle dimming at higher frequency". A converter 5 receives the AC mains voltage, and outputs a DC current. A chopper 6 receives the DC current from the converter 5, and outputs a chopped current having a chopping frequency typically in the range of 300 Hz to 3 kHz, at least higher than the mains frequency. "Chopping" means that in a first portion of the current period (i.e. the inverse of the chopping frequency) the current is zero while in a second portion of the current period the current is equal to the received input current, or vice versa. The ratio of the duration of the second portion to the entire period is indicated as the duty cycle; varying the duty cycle varies the average current.

### SUMMARY OF THE INVENTION

The present invention elaborates further on the higher frequency duty cycle dimming as illustrated in figure 3. A problem in such approach relates to the fact that the system clock determining the chopping frequency is typically a free running clock while the DC current as output by the converter 5 is not exactly constant but has a small variation correlated to the mains phase. The chopping frequency may vary somewhat in practice, or may be stabilized. If the chopping frequency is not an exact multiple of the mains frequency, a beat effect may occur so that the light output slowly varies at a relatively low frequency, which is perceived as flicker: for instance, if the mains frequency is equal to 50 Hz and the chopping frequency is equal to 310 Hz, a beating frequency of 10 Hz may occur. An object of the present invention is to provide a driver system in which this problem is eliminated or at least reduced.

According to an important aspect of the present invention, the chopping frequency is synchronized to the mains frequency, while the phase of the chopping frequency with respect to the mains frequency is set at random. As a result, if multiple LEDs are driven by multiple drivers having the present invention implemented, all LEDs will be driven at the same frequency but they will have different phases with respect to each other. Due to the synchronization, no beat effects will occur. Due to the different phasing of the chopping frequency, the dark periods of the different lamps do not coincide and the overall light output, which is the average of the light outputs of the different LEDs, will show no flicker. Further advantageous elaborations are mentioned in the dependent claims.

It is noted that US patent application 2009/0015174 discloses an illumination system comprising a plurality of LEDs and a plurality of associated drivers. A driver comprises current source means and output connections for a LED. The several drives share a clock generator and a common controller. The common controller generates control signals for sequentially activating the several drivers. The next driver in sequence is activated when the activation duration of the previous driver ends. Consequently, with varying duty cycles of the different current sources, there is no fixed phase relationship between mains and the subsequent current pulses. Accordingly the illumination system of US patent application 2009/0015174 does not provide an optimal solution for the above mentioned beat effect and flickering.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
figure 1 is a block diagram schematically illustrating a traditional approach for dimming a light source;
figure 2 is a block diagram schematically illustrating a different but nevertheless traditional approach for dimming a light source;
figure 3 is a block diagram schematically illustrating "duty cycle dimming at higher frequency";
figure 4 is a block diagram schematically illustrating an embodiment of a LED driver according to the present invention;
figure 5 is a block diagram schematically illustrating a system comprising multiple LEDs with associated drivers.

### DETAILED DESCRIPTION OF THE INVENTION

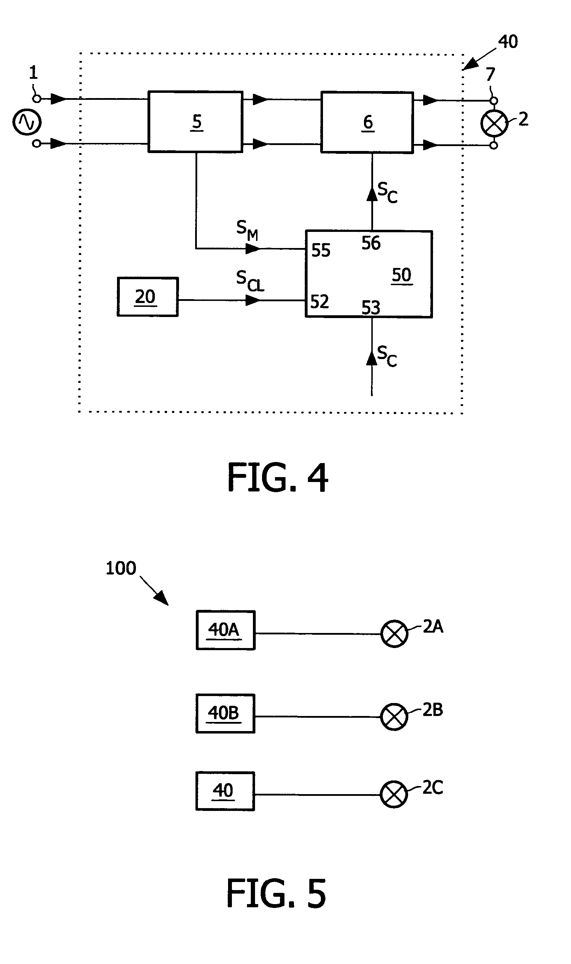

Figure 4 is a block diagram schematically illustrating an embodiment of a LED driver 40 according to the present invention. The general design of this driver corresponds to a great extent to the design of figure 3; a lamp output is indicated at 7. The driver 40 further comprises a controller 50 for controlling the chopper 6 and a clock generator 20 for generating a clock signal S_{CL}. The controller 50 has a clock input 52 coupled to an output of the clock generator 20 for receiving the clock signal S_{CL} from the clock generator 20. The controller 50 has a user input 53 for receiving a user input signal S_{U} indicating a desired dimming level, the user input signal for instance being generated by a potentiometer (not shown). The controller 50 has a mains input 55 coupled to the ACDC converter (or, alternatively, to the input 1 directly) for receiving a mains signal S_{M} representing the actual phase of the mains voltage at input 1; such mains signal may be derived from the input mains voltage or any intermediate voltage by any suitable means, for instance a voltage sensor, as will be clear to a person skilled in the art and requiring no further explanation. The controller 50 has a control output 6 coupled to the chopper 6.

At its control output 6, the controller 50 generates a control signal S_{C} for the chopper 6, the control signal S_{C} determining the switching moments when the current from the ACDC converter 5 is blocked and the switching moments when the current from the ACDC converter 5 is allowed to pass. Particularly, the control signal S_{C} determines the chopping frequency and the chopping period, and determines the chopping duty cycle.

The controller 50 is designed to calculate the required duty cycle on the basis of the user input signal S_{U}.

Further, the controller 50 is designed to calculate the chopping frequency at an arbitrary suitable value within a predetermined frequency range, for instance from 300 Hz to 3000 Hz, or at a fixed frequency predetermined by the manufacturer.

According to an important feature of the present invention, the controller 50 is designed to have the control signal S_{C} (or, in any case, the resulting chopped output current) be synchronized with the mains voltage at input 1, on the basis of the mains signal S_{M}. Methods for synchronizing the output control signal S_{C} with the input mains signal S_{M} are available and clear to a person skilled in the art, and include for instance a phase-locked loop; a further explanation is not required here.

On synchronizing the output control signal S_{C} with the input mains signal S_{M}, the controller 50 has a freedom as regards the phase difference of the output control signal S_{C} (cq the resulting chopped output current) with respect to the input mains signal S_{M}. This phase difference can for instance be expressed as the phase of the output control signal S_{C} (cq the resulting chopped output current) at a downwards zero-crossing of the input mains signal S_{M}, as should be clear to a person skilled in the art.

If said phase difference would be a predetermined fixed value, equal to all drivers, then the result would be that, in a system 100 having multiple LEDs with different drivers, all LEDs would be switched ON and/or OFF at exactly the same moment, so any flicker effect would be intensified and more noticeable. Therefore, in such system, it would be advantageous if the output control signals of the different drivers have mutually different phases. One solution would be to provide a set of drivers 40A, 40B, 40C etc adapted to each other so that they have mutually different phases; for instance, in a system comprising 12 drivers, the mutual phase differences can always be 30° or an integer multiple thereof.

However, a solution that offers more flexibility and that is therefore preferred does not require adapting drivers to each other. In this preferred embodiment, the controller 50 is always designed to set the phase difference of the output control signal S_{C} (cq the resulting chopped output current) with respect to the input mains signal S_{M} at a random value between 0 and 360°. Then, in a system 100 having multiple LEDs 2A, 2B, 2C with different drivers 40A, 40B, 40C (see fig.5), the result would be that in practice the chances are high that different drivers 40A, 40B, 40C would have different phases and the dark periods of the different lamps would not coincide so that any flicker would be hardly or not noticeable any more.

It is noted that methods for determining a random phase difference for the output control signal S_{C} will be known to a person skilled in the art and require no further explanation.

It is further noted that the random phase difference does not have to be perfectly constant in time. If this phase difference changes slowly over time, i.e. on a time scale much larger than the mains period, such would be hardly or not noticeable to the human eye. Further, assuming that such changes themselves are mutually independent and do not result in the different output control signals S_{C} becoming synchronized, the result would still be that the dark periods of the different light outputs would not coincide and the overall light output, which is the average of the light outputs of the different LEDs, would show hardly or no flicker.

It is further noted that it is preferred that the chopping frequency is the same for all drivers, but this is not essential.

Summarizing, the present invention provides a driver 10 for driving a LED 2, which driver comprises:
- an ACDC converter 5 receiving AC mains voltage and generating DC output current;
- a chopper 6 receiving the DC output current and provide a regularly interrupted output current;
- a clock generator 20 generating a clock signal S_{CL};
- a controller 50 receiving a user input signal S_{U} indicating a dimming level, receiving the clock signal, receiving a mains signal S_{M} representing the actual phase of the mains voltage, and generating a control signal S_{C} for the chopper.

The chopper is responsive to the controller's control signal as regards the switching moments of the output current.

The controller calculates the required duty cycle on the basis of the user input signal.

The controller synchronizes its control signal with the mains signal.

The controller sets an arbitrary value for the phase difference of the output control signal with respect to the input mains signal.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims. For instance, it is possible that the chopper 6 and the converter 5 are integrated into one unit, and it is possible that the chopping effect is obtained by regularly switching the converter 5 ON and OFF.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Illumination system (100) comprising a plurality of LEDs (2A; 2B; 2C) with associated drivers (40A; 40B; 40C), each driver comprising:
- a power input (1) for receiving AC mains voltage;
- current source means (5, 6) for receiving the AC mains voltage and designed to provide a regularly interrupted output current having a current interruption frequency and a variable duty cycle;
- a lamp output (7) connected to one or more LEDs of the plurality of LEDs;
- a clock generator (20) for generating a clock signal (S_{CL});
- a controller (50), having a user input (53) for receiving a user input signal (S_{U}) indicating a desired dimming level, having a clock input (52) coupled for receiving the clock signal (S_{CL}), having a mains input (55) coupled for receiving a mains signal (S_{M}) representing the actual phase of the mains voltage at input (1), and having a control output (56) for generating a control signal (S_{C}) for the current source means (5, 6);
- wherein the controller (50) is designed to calculate the required duty cycle on the basis of the user input signal (S_{U});
- wherein the controller (50) is designed to synchronize its control signal (S_{C}) with the mains signal (S_{M}); and
- wherein, at moments in time indicated by the control signal (S_{C}), the current source means (5, 6) regularly interrupt the output current;
**characterized in that**,
- each driver (40A;40B;40C) has its own controller (50); and
- each controller (50) is designed to set, independently and randomly, its own fixed value for the phase difference of its output control signal (S_{C}) with respect to the input mains signal (S_{M}), such that there is a high chance that two or more of the controllers (50) of the different drivers (40A;40B;40C) of the illumination system (100) generate output control signals (S_{C}) with different phase differences with respect to the mains signal (S_{M}).

2. Illumination system according to claim 1, wherein each controller (50) is designed to calculate the current interruption frequency within a predetermined frequency range, for instance from 300 Hz to 3000 Hz..

3. Illumination system according to claim 1, wherein each current source means comprise:
- an ACDC converter (5) for receiving the AC mains voltage and designed to generate a DC output current;
- a controllable chopper (6) for receiving the DC output current from the ACDC converter (5) and designed to provide a regularly interrupted output current having a variable duty cycle.

## Patentansprüche

1. Beleuchtungssystem (100), das mehrere LEDs (2A; 2B; 2C) mit zugeordneten Treibern (40A; 40B; 40C) umfasst, wobei jeder Treiber aufweist:
- einen Leistungseingang (1) zur Aufnahme einer Netzwechselspannung;
- Stromquellenmittel (5, 6), welche die Netzwechselspannung aufnehmen und so vorgesehen sind, dass sie einen regelmäßig unterbrochenen Ausgangsstrom mit einer Stromunterbrechungsfrequenz und einem variablen Tastverhältnis bereitstellen;
- einen Lampenausgang (7), der mit einer oder mehreren LEDs der mehreren LEDs verbunden ist;
- einen Taktgenerator (20) zur Erzeugung eines Taktsignals (S_{CL}),
- eine Steuereinrichtung (50) mit einem Benutzereingang (53) zum Empfang eines eine gewünschte Dimmungsstufe anzeigenden Benutzereingangssignals (S_{U}), mit einem zum Empfang des Taktsignals (S_{CL}) geschalteten Takteingang (52), mit einem Netzeingang (55), der zum Empfang eines die aktuelle Phase der Netzspannung an Eingang (1) darstellenden Netzsignals (S_{M}) geschaltet ist, sowie mit einem Steuerausgang (56) zur Erzeugung eines Steuersignals (S_{C}) für die Stromquellenmittel (5, 6);
- wobei die Steuereinrichtung (50) so eingerichtet ist, dass sie das erforderliche Tastverhältnis auf der Grundlage des Benutzereingangssignals (S_{U}) berechnet;
- wobei die Steuereinrichtung (50) so eingerichtet ist, dass sie ihr Steuersignal (S_{C}) mit dem Netzsignal (S_{M}) synchronisiert; und
- wobei zu Zeitpunkten, die durch das Steuersignal (S_{C}) angezeigt werden, die Stromquellenmittel (5, 6) den Ausgangsstrom regelmäßig unterbrechen;
**dadurch gekennzeichnet, dass**
- jeder Treiber (40A; 40B; 40C) seine eigene Steuereinrichtung (50) aufweist; und
- jede Steuereinrichtung (50) so eingerichtet ist, dass sie ihren eigenen Festwert für die Phasendifferenz ihres Ausgangssteuersignals (S_{C}) gegenüber dem Netzeingangssignal (S_{M}) unabhängig und zufällig festlegt, so dass eine große Wahrscheinlichkeit besteht, dass zwei oder mehrere der Steuereinrichtungen (50) der verschiedenen Treiber (40A; 40B; 40C) des Beleuchtungssystems (100) Ausgangssteuersignale (S_{C}) mit verschiedenen Phasendifferenzen gegenüber dem Netzsignal (S_{M}) erzeugen.

2. Beleuchtungssystem nach Anspruch 1, wobei jede Steuereinrichtung (50) so eingerichtet ist, dass sie die Stromunterbrechungsfrequenz innerhalb eines vorher festgelegten Frequenzbereichs, beispielsweise von 300 Hz bis 3000 Hz, berechnet.

3. Beleuchtungssystem nach Anspruch 1, wobei jedes Stromquellenmittel umfasst:
- einen Wechselstrom-Gleichstrom-Stromrichter (5) zur Aufnahme der Netzwechselspannung, der so ausgeführt ist, dass er einen Ausgangsgleichstrom erzeugt;
- einen steuerbaren Chopper (6) zur Aufnahme des Ausgangsgleichstroms von dem Wechselstrom-Gleichstrom-Stromrichter (5), wobei der Chopper so ausgeführt ist, dass er einen regelmäßig unterbrochenen Ausgangsstrom mit einem variablen Tastverhältnis bereitstellt.

## Revendications

1. Système d'éclairage (100) comprenant une pluralité de DEL (2A ; 2B ; 2C) avec des pilotes associés (40A ; 40B ; 40C), chaque pilote comprenant :
- une entrée de puissance (1) pour recevoir une tension du réseau électrique c.a. ;
- des moyens de source de courant (5, 6) pour recevoir la tension du réseau électrique c.a. et conçus pour fournir un courant de sortie régulièrement interrompu présentant une fréquence d'interruption de courant et un cycle de service variable ;
- une sortie de lampe (7) connectée à une ou plusieurs DEL de la pluralité de DEL ;
- un générateur d'horloge (20) pour générer un signal d'horloge (S_{CL}) ;
- un dispositif de commande (50) comprenant une entrée utilisateur (53) pour recevoir un signal d'entrée utilisateur (S_{U}) indiquant un niveau de gradation d'intensité lumineuse, comprenant une entrée (52) d'horloge couplée pour recevoir le signal d'horloge (S_{CL}), comprenant une entrée de réseau électrique (55) couplée pour recevoir un signal de réseau électrique (S_{M}) représentant la phase réelle de la tension du réseau électrique à l'entrée (1) et comprenant une sortie de commande (56) pour générer un signal de commande (S_{C}) pour les moyens de source de courant (5, 6) ;
- dans lequel le dispositif de commande (50) est conçu pour calculer le cycle de service requis sur la base du signal d'entrée utilisateur (S_{U}) ;
- dans lequel le dispositif de commande (50) est conçu pour synchroniser son signal de commande (S_{C}) avec le signal de réseau électrique (S_{M}) ; et
- dans lequel, à certains moments dans le temps indiqués par le signal de commande (S_{C}), les moyens de source de courant (5, 6) interrompent régulièrement le courant de sortie ;
**caractérisé en ce que**,
- chaque pilote (40A ; 40B ; 40C) possède son propre dispositif de commande (50) ; et
- chaque dispositif de commande (50) est conçu pour régler, indépendamment et de manière aléatoire, sa propre valeur fixe pour le déphasage de son signal de commande de sortie (S_{C}) par rapport au signal de réseau électrique d'entrée (S_{M}), de sorte qu'il existe de fortes chances que deux ou plus de deux des dispositifs de commande (50) des différents pilotes (40A ; 40B ; 40C) du système d'éclairage (100) génèrent des signaux de commande de sortie (S_{C}) ayant des déphasages différents par rapport au signal du réseau électrique (S_{M}).

2. Système d'éclairage selon la revendication 1, dans lequel chaque dispositif de commande (50) est conçu pour calculer la fréquence d'interruption de courant au sein d'une gamme de fréquences prédéterminée, par exemple allant de 300 Hz à 3000 Hz.

3. Système d'éclairage selon la revendication 1, dans lequel chaque moyen de source de courant comprend :
- un convertisseur CA/CC (5) pour recevoir la tension du réseau électrique c.a. et conçu pour générer un courant continu de sortie ;
- un hacheur contrôlable (6) pour recevoir le courant continu de sortie provenant du convertisseur CA/CC (5) et conçu pour fournir un courant de sortie régulièrement interrompu présentant un cycle de service variable.
